# EUROPEAN PATENT APPLICATION

(11) **EP 4 597 318 A1**
(43) Date of publication of application: **06.08.2025**
(21) Application number: 25154281.7
(22) Date of filing: 27.01.2025
(51) Int. Cl.: G06F 9/50, G06F 9/54, G06T 1/60, G06T 15/00

(54) **MANAGEMENT OF THE VERTEX BUFFER**

(30) Priority: 02.02.2024 GB 202401403
(71) Applicant: Imagination Technologies Limited, Kings Langley, Hertfordshire WD4 8LZ (GB)
(72) Inventor: KING, Ian, Kings Langley, Hertfordshire, WD4 8LZ (GB); BARNARD, Daniel, Kings Langley, Hertfordshire, WD4 8LZ (GB)
(74) Representative: CMS Cameron McKenna Nabarro Olswang LLP

(57) **Abstract**

A method of managing resources in a GPU is described. The method comprises allocating a region of off-chip storage to a geometry task on creation of the geometry task and receiving, at an on-chip store in the GPU, a memory allocation request for the geometry task from a shader core in the GPU, wherein the memory allocation request is received after generation of geometry data for the geometry task. In response to receiving the memory allocation request, the method comprises determining, by the on-chip store, whether to allocate a region of the on-chip store to the geometry task. In response to allocating the region of the on-chip store, geometry data for the geometry task is written to the on-chip store and in response to determining not to allocate the region of the on-chip store, the geometry data is written to the allocated region of off-chip storage.

## Description

### CROSS-REFERENCE TO RELATED APPLICATION

This application claims priority from UK patent application 2401403.7 filed on 02 February 2024, which is herein incorporated by reference in its entirety.

### TECHNICAL FIELD

The invention relates to allocation of resources for storing geometry data in a GPU.

### BACKGROUND

There are typically many tasks executing in a graphics processing unit (GPU) at any time. As part of their execution, a task may require data to be read from memory and this can introduce a delay. To reduce the impact of the delay on the overall efficiency of the GPU, the GPU may pause the execution of the task until the requested data is returned and in the meantime execute other tasks. This relies upon there being sufficient other executing, and not paused, tasks within the GPU.

The embodiments described below are provided by way of example only and are not limiting of implementations which solve any or all of the disadvantages of known methods of resource allocation within a GPU.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method of managing resources in a GPU is described. The method comprises allocating a region of off-chip storage to a geometry task on creation of the geometry task and receiving, at an on-chip store in the GPU, a memory allocation request for the geometry task from a shader core in the GPU, wherein the memory allocation request is received after generation of geometry data for the geometry task. In response to receiving the memory allocation request, the method comprises determining, by the on-chip store, whether to allocate a region of the on-chip store to the geometry task. In response to allocating the region of the on-chip store, geometry data for the geometry task is written to the on-chip store and in response to determining not to allocate the region of the on-chip store, the geometry data is written to the allocated region of off-chip storage.

A first aspect provides a method of managing resources in a GPU, the method comprising: allocating a region of off-chip storage to a geometry task on creation of the geometry task; receiving, at an on-chip store in the GPU, a memory allocation request for the geometry task from a shader core in the GPU, wherein the memory allocation request is received after generation of geometry data for the geometry task; in response to receiving the memory allocation request, determining, by the on-chip store, whether to allocate a region of the on-chip store to the geometry task; and in response to determining to allocate the region of the on-chip store to the geometry task, allocating the region, wherein in response to allocating the region of the on-chip store, geometry data for the geometry task is written to the on-chip store and in response to determining not to allocate the region of the on-chip store, the geometry data is written to the allocated region of off-chip storage.

The method may further comprise: in response to allocating the region of the on-chip store, directing a subsequent write instruction for the geometry task received at the on-chip store to the allocated region; and in response to determining not to allocate the region of the on-chip store, directing a subsequent write instruction for the geometry task received at the on-chip store to the allocated region of the off-chip storage.

The method may further comprise: calculating an on-chip storage address for the geometry task; and in response to determining not to allocate the region of the on-chip store, calculating an updated storage address by adding an offset to the calculated address, wherein the on-chip storage address is used when directing a subsequent write to the on-chip store and the updated storage address is used when directing a subsequent write to the off-chip storage.

The method may further comprise: calculating an on-chip storage address for the geometry task; and in response to determining not to allocate the region of the on-chip store, tagging the address with a first value; and in response to determining to allocate the region of the on-chip store, tagging the address with a second value; wherein the value of the tag is used to determine whether to direct a subsequent write to the on-chip store or to the off-chip storage.

Determining, by the on-chip store, whether to allocate a region of the on-chip store to the geometry task may comprise: in response to determining that space is available in the on-chip store, allocating the region of the on-chip store to the geometry task.

Determining, by the on-chip store, whether to allocate a region of the on-chip store to the geometry task may further comprise: in response to determining that space is not available in the on-chip store, determining whether a geometry pipeline in the GPU is in an out-of-memory state; and in response to determining that the geometry pipeline is in an out-of-memory state, determining not to allocate the region of the on-chip store.

The method may further comprise: on creation of the geometry task, sending an identifier for the geometry task to the on-chip store and adding the identifier to a FIFO in the on-chip store; and in response to receiving the memory allocation request at the on-chip store and prior to determining, by the on-chip store, whether to allocate a region of the on-chip store to the geometry task: setting a bit in a mask corresponding to the identifier for the geometry task, wherein the memory allocation request comprises the identifier for the geometry task; determining whether the identifier for the geometry task is in a first position in the FIFO; and in response to determining that the identifier for the geometry task is in a first position in the FIFO, popping the task from the FIFO and proceeding to determine whether to allocate a region of the on-chip store to the geometry task.

The method may further comprise: in response to receiving, at the on-chip store, a memory read request for the geometry data for the geometry task from a geometry pipeline in the GPU, determining, by the on-chip store, whether a region of the on-chip store was allocated to the geometry task; in response to determining that a region of the on-chip store was allocated, directing the read request to the on-chip store; and in response to determining that a region of the on-chip store was not allocated, directing the read request to the off-chip storage.

The method may further comprise, in response to the GPU exiting an out-of-memory state: identifying a previously received memory allocation request for a geometry task where the geometry data for the geometry task was previously written to the off-chip storage; determining whether space for the previously written geometry data is available in the on-chip store; and in response to determining that space is available, loading the geometry data from the off-chip store into the on-chip store.

The method may further comprise: in response to allocating the region of the on-chip store, sending a message to the shader core to indicate a successful allocation; and in response to determining not to allocate the region of the on-chip store, sending a message to the shader core to indicate allocation failure, wherein the message indicating a successful allocation causes the shader core to write the geometry data for the geometry task to the on-chip store and the message indicating allocation failure causes the shader core to write the geometry data to the allocated region of off-chip storage.

The method may further comprise: in response to completion of the geometry task, freeing the allocated region of off-chip storage and any allocated region of the on-chip store.

The allocated region of off-chip storage may be identified by a geometry data spill identifier allocated to the task and the method may further comprise: in response to completion of the geometry task, freeing the geometry data spill identifier.

The geometry data spill identifier may be allocated to the task on creation of the geometry task from a finite pool of geometry data spill identifiers.

A second aspect provides a graphics processing unit, GPU, comprising: a resource scheduler; a shader core; a geometry pipeline; and an on-chip store, wherein the resource scheduler is arranged to allocate a region of off-chip storage to a geometry task on creation of the geometry task, and wherein the on-chip store is arranged, in response to receiving a memory allocation request for the geometry task from the shader core in the GPU, to determine whether to allocate a region of the on-chip store to the geometry task and in response to determining to allocate the region of the on-chip store to the geometry task, to allocate the region, wherein in response to allocating the region of the on-chip store, geometry data for the geometry task is written to the on-chip store and in response to determining not to allocate the region of the on-chip store, the geometry data is written to the allocated region of off-chip storage, wherein the memory allocation request is received after generation of geometry data for the geometry task.

The on-chip store may be further arranged, in response to allocating the region of the on-chip store, to direct a subsequent write instruction for the geometry task received at the on-chip store to the allocated region; and in response to determining not to allocate the region of the on-chip store, to direct a subsequent write instruction for the geometry task received at the on-chip store to the allocated region of the off-chip storage.

The on-chip store may be further arranged, to: calculate an on-chip storage address for the geometry task; and in response to determining not to allocate the region of the on-chip store, calculate an updated storage address by adding an offset to the calculated address, wherein the on-chip storage address is used when directing a subsequent write to the on-chip store and the updated storage address is used when directing a subsequent write to the off-chip storage.

The resource scheduler may be further arranged, on creation of the geometry task, to send an identifier for the geometry task to the on-chip store, and wherein the on-chip store is further arranged to: adding the identifier to a FIFO in the on-chip store and in response to receiving the memory allocation request and prior to determining whether to allocate a region of the on-chip store to the geometry task: set a bit in a mask corresponding to the identifier for the geometry task, wherein the memory allocation request comprises the identifier for the geometry task; determine whether the identifier for the geometry task is in a first position in the FIFO; and in response to determining that the identifier for the geometry task is in a first position in the FIFO, pop the task from the FIFO and proceed to determine whether to allocate a region of the on-chip store to the geometry task.

The on-chip store may be further arranged, in response to the GPU exiting an out-of-memory state, to: identify a previously received memory allocation request for a geometry task where the geometry data for the geometry task was previously written to the off-chip storage; determine whether space for the previously written geometry data is available in the on-chip store; and in response to determining that space is available, load the geometry data from the off-chip store into the on-chip store.

The GPU may be embodied in hardware on an integrated circuit. There may be provided a method of manufacturing, at an integrated circuit manufacturing system, a GPU. There may be provided an integrated circuit definition dataset that, when processed in an integrated circuit manufacturing system, configures the system to manufacture a GPU. There may be provided a non-transitory computer readable storage medium having stored thereon a computer readable description of a GPU that, when processed in an integrated circuit manufacturing system, causes the integrated circuit manufacturing system to manufacture an integrated circuit embodying a GPU.

There may be provided an integrated circuit manufacturing system comprising: a non-transitory computer readable storage medium having stored thereon a computer readable description of the GPU; a layout processing system configured to process the computer readable description so as to generate a circuit layout description of an integrated circuit embodying the GPU; and an integrated circuit generation system configured to manufacture the GPU according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 is a schematic diagram showing an example sequence of operations 100 within a GPU;
Figure 2 is a flow diagram showing a first example of the improved method of resource allocation;
Figure 3 is a schematic diagram of a first example GPU in which the methods described herein may be implemented;
Figure 4 is a flow diagram showing a second example of the improved method of resource allocation;
Figure 5 is a flow diagram showing an example method of address calculation for use in the methods described herein;
Figure 6 is a flow diagram showing an example method of handling reads from a geometry pipeline;
Figure 7 is a schematic diagram of a second example GPU in which the methods described herein may be implemented;
Figure 8 is flow diagram showing an example method of writing data back from the off-chip storage into the on-chip storage once the geometry pipeline exits from the OOM state;
Figure 9 is a schematic diagram of a second example GPU in which the methods described herein may be implemented;
Figure 10 is a flow diagram showing a third example of the improved method of resource allocation;
Figure 11 shows a computer system in which a graphics processing system is implemented; and
Figure 12 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, to hide the latency of a task executing within a GPU and increase the overall efficiency of the GPU, e.g. where the task requires data to be read from memory or stalls for another reason, the task may be paused and another task executed until the data is returned. To work efficiently, this relies upon there being sufficient other tasks that are executing within the GPU and that are also not paused. The number of geometry tasks (e.g. vertex shaders, hull shaders, domain shaders, geometry shaders, amplification shaders and mesh shaders) that can be executing on the GPU at any time is limited by the availability of on-chip storage (e.g. availability of space in the vertex buffer) to store geometry data generated by the geometry tasks. The geometry data generated by a geometry task may include one or more of vertex data, primitive data and index data. When geometry tasks are created (i.e. when the task is allocated both a task ID from a finite pool of task IDs and the on-chip resources required by the task) space to store the generated geometry data is allocated to the task by the resource scheduler, and so the size of the on-chip storage for geometry data (e.g. the size of the vertex buffer) limits the number of geometry tasks that can be created and hence can be executing on the GPU at any time.

As the latency of some geometry tasks increases, the number of geometry tasks that need to be executing in order to hide the latency (e.g. the latency of memory accesses) and improve the efficiency of the GPU also increases. A solution to this is to increase the size of the on-chip storage that is used to store geometry data (e.g. to increase the size of the vertex buffer) which increases the physical size of the GPU. There may be applications, however, where it is not practical or possible to increase the physical size of the GPU and the increased size may have other implications, such as increased power consumption.

Described herein is an improved method of resource allocation which enables more geometry tasks to be running in the GPU and hence improves the overall GPU performance (e.g. by improving efficiency and/or hiding the latency of longer geometry tasks more effectively). The method removes the link between the size of the on-chip storage and the number of geometry tasks that can be executing on the GPU at any one time. As described in more detail below, instead of allocating space in the on-chip memory (e.g. the vertex buffer) when a task is created, space in off-chip memory is allocated on task creation. Then, at the point that the geometry data is written to memory, a resource manager in the on-chip memory controls whether the geometry data is written to the off-chip memory allocation or to the on-chip memory.

By using the improved method described herein, it improves the efficiency of the use of the on-chip storage for geometry data (e.g. the vertex buffer) because space in the on-chip storage is not allocated in advance of when it is needed to store data and the lifetime of the on-chip storage allocations is reduced to the duration of the geometry pipeline (which uses the stored geometry data). This can in some circumstances reduce the length of time that a geometry task uses the on-chip storage by thousands or even tens of thousands of cycles (e.g. by the length of time between the creation of the task and the writing of the data to the on-chip storage). By using the on-chip storage for geometry data more efficiently, the number of geometry tasks that can be executing is increased (e.g. to a number of tasks that collectively have on-chip storage requirements that exceed the available on-chip space) and so the likelihood of being able to hide the latency of high-latency operations within a geometry task is also increased without requiring an increase in the size of on-chip storage. This improves the utilisation of the geometry pipeline (as it will be less likely to be waiting for geometry tasks). It will be appreciated that the method may be used in combination within increasing the size of the on-chip storage in some implementations.

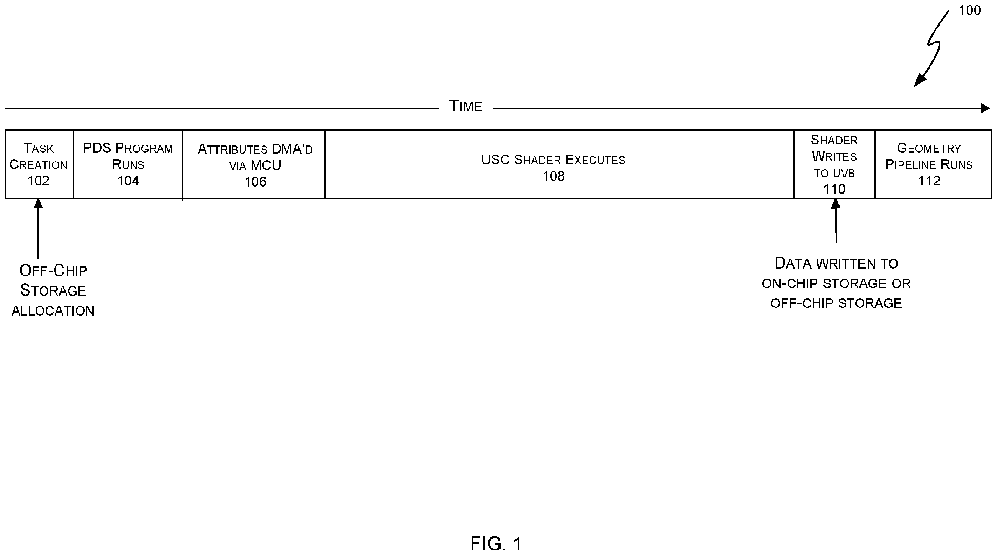

Figure 1 is a schematic diagram showing an example sequence of operations 100 within a GPU with time progressing from left to right. As shown in figure 1, after task creation in the resource scheduler (block 102), scheduling operations are performed (block 104) and attributes are read from memory into the shader core (block 106). The shader core then executes (block 108) and geometry data is written to the on-chip storage (block 110), e.g. to the vertex buffer. The geometry pipeline then runs (block 112) and this uses the data stored in the on-chip storage. At the end of the geometry pipeline execution (in block 112), data is written to memory (e.g. to the parameter buffer) and the geometry task (that was created in block 102) finishes. Using the method described herein, off-chip storage is allocated for the geometry data upon task creation (in block 102) and the decision is made to write the geometry data either to the allocated off-chip storage or to the on-chip storage (e.g. the vertex buffer) at the point that the data is written (in block 110). There is no allocation of on-chip storage (e.g. vertex buffer allocation) at the point the task is created (in block 102) or at any point prior to the point that the data is ready to be written (in block 110).

Where the geometry data is written to the off-chip storage, and not to the on-chip storage, this process may be referred to as "spilling". If the geometry data is written to the off-chip storage, then that particular geometry data (i.e. the geometry data for the particular task that has been spilled to off-chip memory) is never stored in the on-chip memory but is subsequently read by the graphics pipeline from the off-chip storage (in block 112).

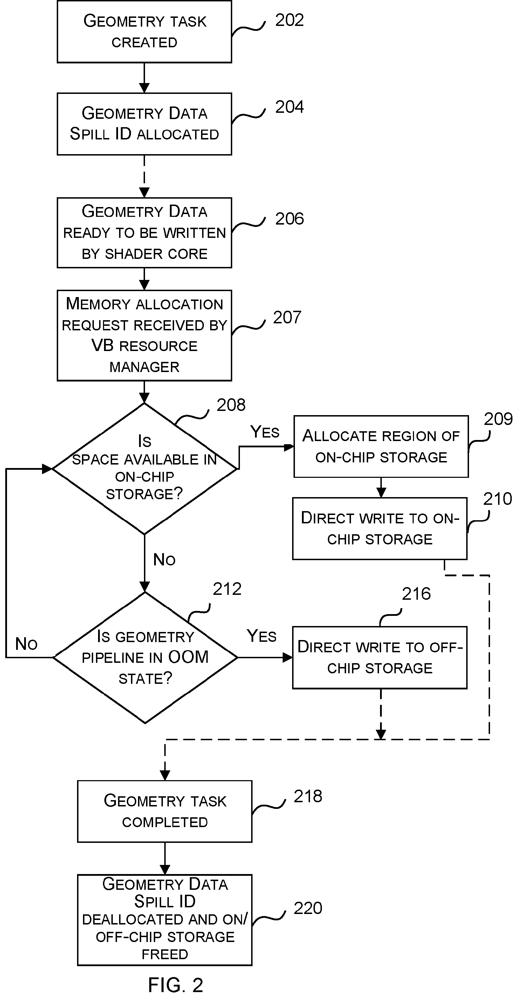

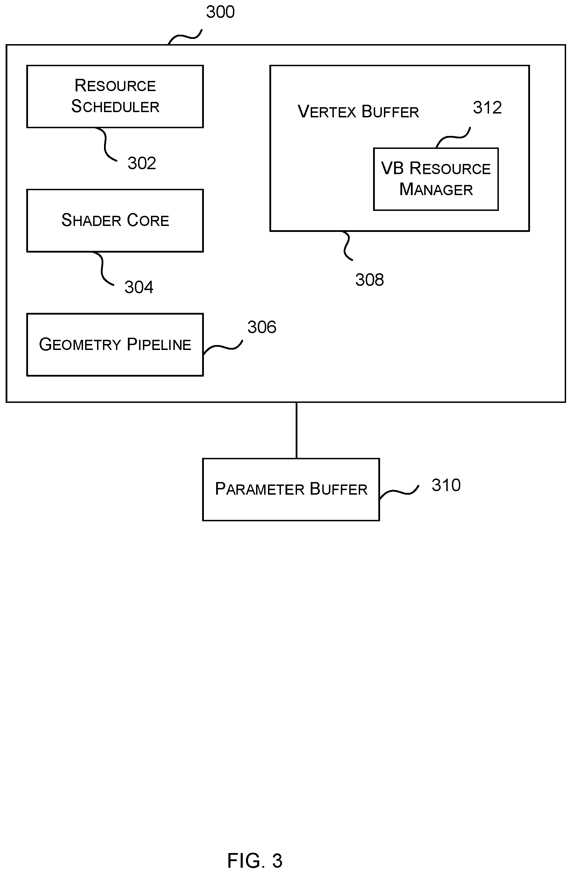

Figure 2 is a flow diagram showing a first example of the improved method of resource allocation. This method can be described with reference to figure 3 which shows an example GPU 300 in which the method of figure 2 (or any of the subsequently described methods) may be implemented. The GPU 300 comprises a resource scheduler 302, shader core 304, geometry pipeline 306 and a vertex buffer 308. The shader core 304 is a processor that comprises a plurality of execution pipelines and can simultaneously process pixel shader, vertex shader and compute shader tasks. The vertex buffer 308 is on-chip storage for the geometry data generated by the shader core 304 and the terms `vertex buffer' and 'on-chip storage for the geometry data' are therefore used interchangeably in the following description. As shown in figure 3, the vertex buffer 308 comprises a resource manager 312, referred to as the vertex buffer (VB) resource manager. The geometry pipeline 306 performs tasks such as clipping, culling and viewport scaling and also performs tessellation and tiling. Figure 3 also shows a parameter buffer 310 that is external to the GPU 300 and may comprise a plurality of data structures which collectively operate as the parameter buffer 310. The parameter buffer 310 is off-chip storage for the data that is generated by the geometry pipeline 306 (e.g. for storing primitive blocks and tile control structures generated by the geometry pipeline). It will be appreciated that a GPU may comprise additional elements in addition to those shown in figure 3 and a processing unit may comprise multiple GPUs 300 as shown in figure 3.

As shown in figure 2, when a geometry task is created by the resource scheduler 302 (block 202), an identifier referred to as a geometry data (GD) spill ID is allocated to the task (block 204). This GD spill ID corresponds to a region in the off-chip memory (which is separate from the parameter buffer 310 described above) and so by allocating the GD spill ID to the task (in block 204), the corresponding region in the off-chip memory is allocated to the task. The allocated region of off-chip memory (that corresponds to the allocated GD spill ID) is subsequently freed by the VB resource manager 312 when the geometry task completes (block 220). The GD spill ID may be allocated to the task from a finite set of GD spill IDs and if there are no unallocated GD spill IDs (i.e. all GD spill IDs are currently allocated), then a new task cannot be created. Use of a finite set of GD spill IDs provides an upper limit on the number of geometry tasks that can be executing in the GPU at any time; however, this upper limit may be bigger than the limit that would be imposed without the use of this improved method of resource allocation and is not linked to the size of the on-chip storage for the geometry data (e.g. the vertex buffer 308). In an example there may be 64-128 GD spill IDs. The number of GD spill IDs may be the same as the number of task IDs in the finite pool of task IDs (from which task IDs are allocated on task creation, as described above).

The size of the region of off-chip memory that corresponds to a GD spill ID may be fixed or may be a variable that is controlled by a graphics driver. By enabling a graphics driver to change the size of the regions that are allocated for each GD spill ID, the graphics driver can set the size to match common / typical resource requirements across a range of applications / workloads (e.g. select the size based on an average case). The graphics driver may additionally adjust how much off-chip memory is allocated dynamically, for example in response to changing conditions within the GPU. If the size of the region that corresponds to a GD spill ID is increased, this increases the overall memory requirements to store the geometry data but it may enable more tasks to be scheduled in parallel (e.g. because a task with large memory requirements may need to be allocated fewer GD spill IDs, see discussion below regarding allocation of more than one GD spill ID to a task). In addition to, or instead of, adjusting the size of the region that corresponds to a GD spill ID, the driver may also apportion the GD spill IDs between different hardware units which feed data into the GPU (and which may be referred to as 'master units'). By allocating a number of GD spill IDs to one or more (or each) of the hardware units, the method can ensure that a particular hardware unit is guaranteed access to GD spill IDs and this avoids deadlocks where future work from one hardware unit blocks earlier work by another hardware unit by consuming all the GD spill IDs.

Subsequently, when geometry data for the task is ready to be written by the shader core 304 (block 206), the shader core 304 sends a memory allocation request to the vertex buffer 308. The memory allocation request may be sent once the shader core has generated some or all of the geometry data for the task. The memory allocation request is sent before the data is written out to the vertex buffer 308. The memory allocation request is received by the VB resource manager 312 in the vertex buffer 308 (block 207) and this triggers the resource manager 312 in the vertex buffer 308 to determine (in blocks 208 and 212) whether the geometry data is to be written to the vertex buffer 308 (block 210) or to the allocated off-chip storage (block 216). The result of this determination of write location (i.e. whether the write will be directed to the on-chip or off-chip storage) may be stored (e.g. in a data structure indexed by an identifier for the task and/or the GD spill ID). The GD spill ID may not be included within the request that is received by the VB resource manager 312 (in block 207), but it may be provided as sideband data between the resource scheduler 302 and the shader core 304. The resource scheduler 302 may send information about the task to the VB resource manager 312 (e.g. GD spill ID and other parameters). The VB resource manager 312 may then hold this information until the shader core 304 sends the allocation request (which may have the task ID or GD spill ID as sideband data) and the VB resource manager 312 can then use the sideband data to perform a lookup in the previously received information.

As a consequence of the results of the determination (in blocks 208 and 212) the VB resource manager 312 then directs the subsequently received write requests from the shader core 304 for the geometry task to either the vertex buffer 308 (in block 210) or the off-chip storage which is allocated to the geometry task (block 216). Where the geometry data is to be written to the vertex buffer 308 (in block 210), a region of the vertex buffer 308 is allocated by the VB resource manager 312 to the geometry task (block 209) in response to determining that space is available in the vertex buffer ('Yes' in block 208). There may be a lag between the receipt of the memory allocation request (in block 207) and the receipt of the subsequent write requests from the shader core but this delay in receiving the write requests does not affect the method, as the allocation has already been performed (in block 209, with the delay in receiving a write request resulting in a delay between blocks 209 and 210). The size of the region allocated in the vertex buffer 308 (in block 209) is the same as the size of the region in the off-chip storage allocated to the geometry task by allocation of a GD spill ID (in block 204).

The VB resource manager 312 may acknowledge the memory allocation requests that are received from the shader core 304 (in block 207), e.g. to acknowledge that an allocation has been made, but the acknowledgement does not contain information about where the write will be directed. As such, the determination by the VB resource manager 312 is invisible to the shader core 304.

Subsequently, when the geometry task completes (block 218), i.e. the geometry pipeline 306 completes the geometry task and writes out data to the parameter buffer 310, this completion is communicated to the VB resource manager 312. This triggers the VB resource manager 312 to deallocate the GD spill ID and free the corresponding off-chip storage allocation as well as the vertex buffer allocation (from block 209) for those tasks where the geometry data was stored in the vertex buffer 308 (block 220).

In the example shown in figure 2, the decision as to where to write the geometry data is made by first determining whether there is sufficient space available in the vertex buffer (in block 208). If there is sufficient space available ('Yes' in block 208, i.e. the available space in the vertex buffer is larger than the on-chip storage requirement size as determined when the task is created) then a region of the vertex buffer 308 (of a size corresponding to the on-chip storage requirement size) is allocated to the geometry task (block 209) and the VB resource manager 312 directs the write to the vertex buffer (block 210). If, however, there is insufficient space available in the vertex buffer ('No' in block 208), it is determined whether the geometry pipeline 306 is in an out-of-memory (OOM) state (block 212). The geometry pipeline 306 enters an OOM state when the parameter buffer 310 is full and hence the geometry pipeline 306 cannot write any more data to the parameter buffer 310. In this OOM situation, geometry tasks cannot complete and so the vertex buffer will not empty and GD spill IDs and their corresponding allocations in the off-chip memory cannot be freed. If the geometry pipeline 306 is in an OOM state ('Yes' in block 212), the geometry data is written to the off-chip storage and the VB resource manager 312 directs the write to the off-chip storage (block 216). If the geometry pipeline 306 is not in an OOM state ('No' in block 212) then this means that the lack of availability of space in the vertex buffer is only temporary as geometry tasks are still able to complete and there is a delay (e.g. during which time the shader core does not progress with the task) until either on-chip storage can be allocated (block 209, following 'Yes' in block 208, as a consequence of other, preceding, geometry tasks completing in blocks 218 and 220 for those earlier tasks) or the geometry pipeline enters an OOM state ('Yes' in block 212).

Whilst figure 2 shows that the GD spill ID is deallocated (in block 220) once the geometry task is completed (in block 218), in a variation, the GD spill ID may be deallocated earlier in the event that on-chip storage is allocated (in block 209). Once on-chip storage is allocated (in block 209), the allocated off-chip storage (corresponding to the GD spill ID) will not be used (i.e. writes will not be directed to the off-chip storage) and so the GD spill ID may be deallocated. This enables the GD spill ID to be reallocated to another task more quickly than if it was not deallocated until the geometry task completed.

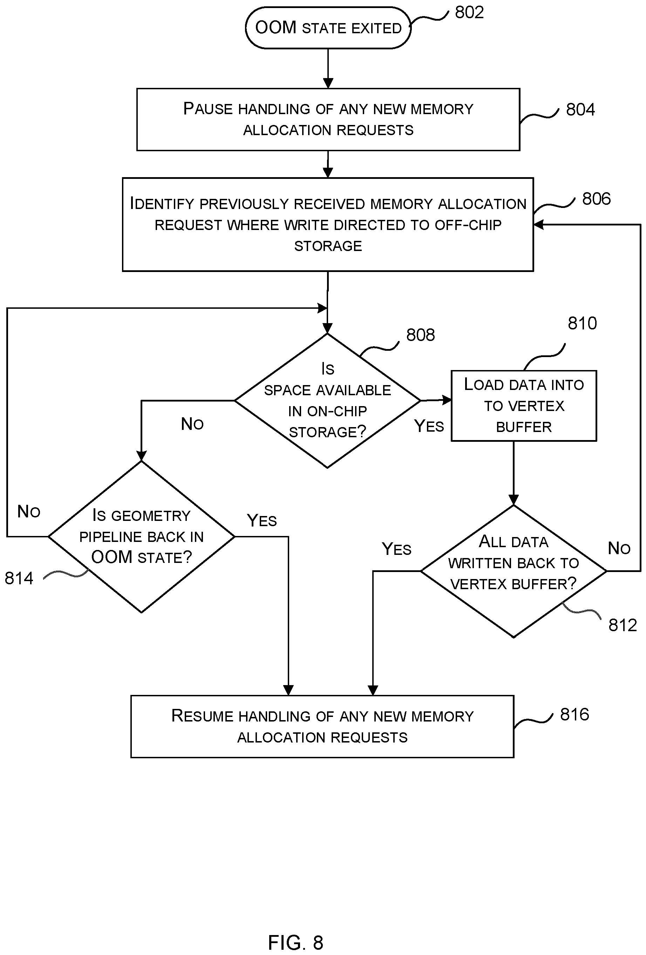

As described above, where the geometry data is written to the off-chip storage (in block 216), the geometry data is subsequently read directly from the off-chip storage by the geometry pipeline 306. In a variation, however, the geometry data may be written back into the vertex buffer 308 and then read by the geometry pipeline 306 from the vertex buffer 308 and not the off-chip storage. This variation is described below with reference to figure 8. Writing the data back to the vertex buffer 308, reduces the overall efficiency (because of the need to write the data back) and adds complexity around handling the write-back process; however, if the data is written back to the vertex buffer 308, the geometry pipeline is less likely to experience long delays when accessing data (caused by off-chip memory reads) because the data will be stored in on-chip storage before a read occurs. Various mechanisms which enable the geometry pipeline 306 to determine where to read the geometry data from in the event that the geometry data is not written back to the vertex buffer 308 are described below. Some of these mechanisms require the geometry pipeline to handle a tag that indicates whether data is stored on-chip (i.e. in the vertex buffer) or off-chip. Other mechanisms are transparent to the geometry pipeline, in the same way as if the data is written back to the vertex buffer, and these mean that the complexity of managing off-chip spilling of geometry data remains within the vertex buffer which can make testing and verification less complex.

In the method described above, each geometry task is allocated a single GD spill ID and it is assumed that the region size that corresponds to a GD spill ID is set to be sufficiently large to hold the geometry data generated by any of the geometry tasks. This can lead to inefficient use of the off-chip storage if there is a significant variability in the size of the geometry data for different geometry tasks, e.g. if the region is sized to accommodate rarer larger geometry tasks and so generally where the geometry data is written to the off-chip storage (in block 216), the regions are not close to full (e.g. where the on-chip requirement size for a task is much smaller than the region size corresponding to a GD spill ID). In other examples, however, a smaller region of the off-chip storage may be allocated for each GD spill ID (e.g. as sized based on a typical size of geometry data generated by a geometry task, such as the average or median size) and larger tasks (i.e. tasks that generate more geometry data than can be stored in a single region of off-chip memory) are allocated more than one GD spill ID. In such implementations, the graphics drivers communicate the number of GD spill IDs to allocate for each geometry task to the resource scheduler 302. The GD spill IDs that are allocated may be contiguous as they correspond to addresses in memory and use of contiguous GD spill IDs results in more efficient memory use (e.g. it reduces fragmentation). Where the number of GD spill IDs that are allocated (in block 204) varies, the number of GD spill IDs that are allocated to a particular task may be communicated to the VB resource manager 312 from the resource scheduler 302 (that created the geometry task) so that the VB resource manager 312 knows how much space the geometry task requires to store geometry data. If the GD spill IDs are contiguous then it is not necessary to communicate each allocated GD spill ID and only the number of GD spill IDs that have been allocated. This reduces the amount of data that has to be communicated. Where more than one GD spill ID is allocated to a geometry task, this reduces the maximum number of tasks that can be running in the shader core at the same time.

The execution of geometry tasks by the shader core 304 may be out of order and this may result in memory allocation requests being received by the VB resource manager 312 (in block 207) in a different order to the order in which the geometry tasks were created (in block 202). In order to avoid a later-created geometry task blocking an earlier-created geometry task, the VB resource manager 312 may handle the memory allocation requests that are received (in block 207) in order of task creation.

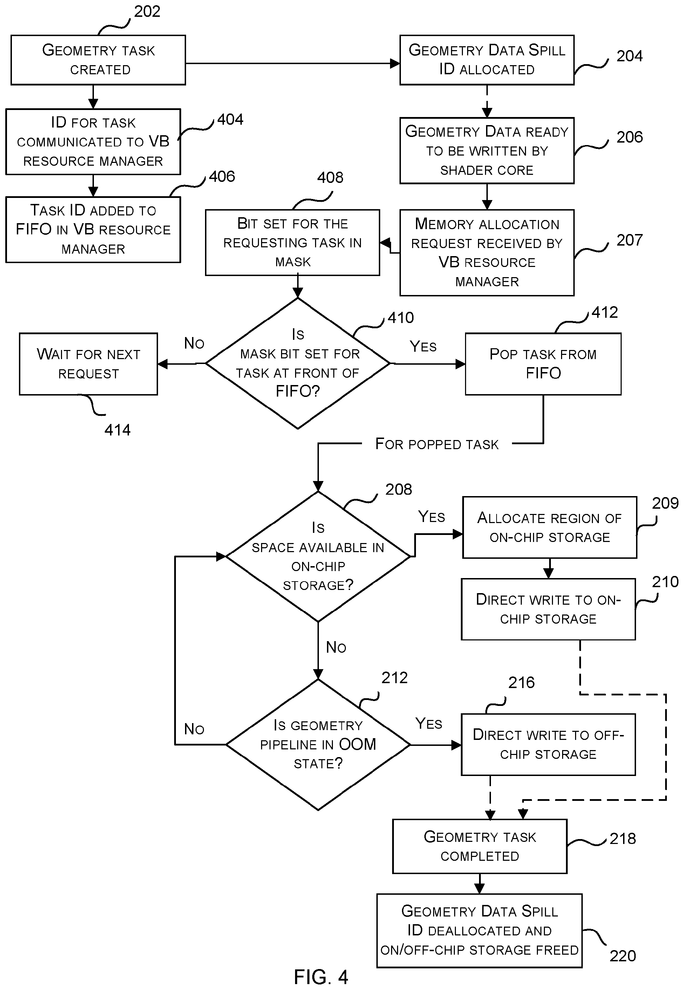

Figure 4 is a flow diagram showing a second example of the improved method of resource allocation which is a variation on that shown in figure 2 and described above. This method may also be implemented in the GPU 300 shown in figure 3. The method of figure 4 includes additional method blocks that may be used to ensure that the memory allocation requests are handled in creation order by the VB resource manager 312. It will be appreciated that this shows one way in which the order may be maintained, but other methods may alternatively be used.

As shown in figure 4, when a task is created by the resource scheduler 302 (in block 202), an identifier (ID) for the task is communicated to the VB resource manager 312 (block 404) and this ID is added to a FIFO in the vertex buffer 308 (block 406). This FIFO may be in the VB resource manager 312 or elsewhere in the vertex buffer 308 but accessible by the VB resource manager 312 and it will be appreciated that alternative memory structures may be used which are capable of storing the IDs in the order in which they are received and added (in block 406) and tracking which ID is next in order (e.g. a circular buffer).

When a memory allocation request is received by the VB resource manager 312 for a geometry task (in block 207), a bit corresponding to the ID for that task (as communicated in the memory allocation request) is set in a mask (block 408). The combination of the mask and the FIFO are then used to control the order in which memory allocation requests are handled by the VB resource manager 312. If the mask bit for the task at the front of the FIFO is set ('Yes' in block 410), then that task is next in creation-order to be handled. The task is popped from the front of the FIFO (block 412) and the method of figure 2 continues for that popped task as described above (e.g. to decide where the write of the geometry data should be directed in blocks 208-216). If, however, the mask bit for the task at the front of the FIFO is not set ('No' in block 410), then that task is not the next in creation-order to be handled and so the method waits for the arrival of the next memory allocation request (block 414).

The ID for the task that is used for the ordering (i.e. sent to the vertex buffer in block 404 and specified in the mask) may be any ID for the task that is also included in the memory allocation requests (received in block 207). In some examples, the GD spill ID may be used (or the first GD spill ID for a task which is allocated multiple GD spill IDs); however as these GD spill IDs are reused relatively often as they are allocated from a relatively small finite set of GD spill IDs (which as described above, may correspond to the number of available task IDs), another task identifier may be used and this may be an existing ID that is used for other purposes or a newly assigned ID.

Where the method of figure 4 is used and tasks may be allocated more than one GD spill ID, the number of GD spill IDs allocated to a task may be communicated from the resource scheduler 302 to the VB resource manager 312 along with the ID for the task (in block 404) and this avoids the need to include multiple GD spill IDs in the memory allocation request (received in block 207). This means that the shader core 304 does not need knowledge or visibility of the number of GD spill IDs allocated to any particular task. Furthermore, where a task has an ID separate from the GD spill ID, that ID may be included in the memory allocation request and the GD spill ID may be omitted from the memory allocation request. Instead the GD spill ID(s) may be communicated along with the ID for the task (in block 404) and stored together in the FIFO or elsewhere in the VB resource manager 312. It will be appreciated that these two optimizations may be used together or independently of each other.

By using the method of figure 4, the potentially out-of-order allocation requests (as received in block 207) are queued up and presented in order to the VB resource manager 312. This prevents blocking of earlier-created tasks by later-created tasks, as described above.

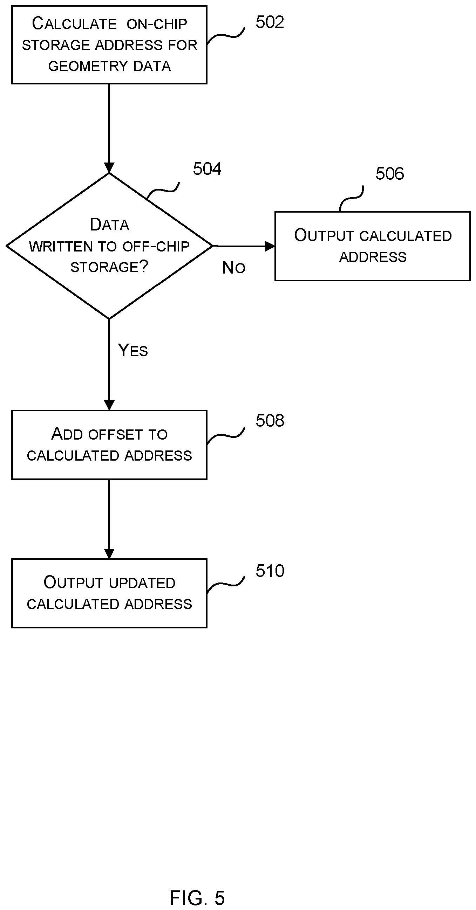

Prior to directing writes (in blocks 210 and 216), the VB resource manager 312 calculates and stores a starting address for the write which refers to either the vertex buffer 308 or to the off-chip storage. An off-chip address is calculated when it is determined that writes will be directed to off-chip storage (following a 'Yes' in block 212 and prior to block 216) and an on-chip address is calculated when allocating the region of on-chip storage (in block 209). In some examples, separate address calculation operations may be performed dependent upon whether the geometry data is to be written to the vertex buffer 308 or to the off-chip storage. In other examples, however, the off-chip storage may mirror the vertex buffer structure and then the same address calculation logic may be used in both circumstances. An additional offset may be added to the address in the event that the geometry data is to be written to the off-chip storage, as shown in figure 5.

Figure 5 shows an example method of address calculation for use in the methods of figures 2 and 4 described above. An initial memory address is calculated using address calculation logic (block 502) and this is output (block 506) and used to write data to the vertex buffer 308 in the event that the geometry data is written to the vertex buffer ('No' in block 504). However, if the geometry data is instead written to off-chip storage ('Yes' in block 504), an offset is added to the calculated address (block 508) before it is output (block 510) and used to write data to the off-chip storage. The offset that is added (in block 508) may be read from configuration registers and may be the same for all writes or may be selected based on one or more factors, such as the core to which the geometry task relates, the graphics driver to which the geometry task relates, etc. In some examples, the offset that is added (in block 508) may comprise a plurality of different partial offsets, each of which is selected and added based on a different factor (e.g. one offset dependent upon the core, another offset dependent upon the graphics driver, etc.) and this reduces the amount of computation required and the number of different offsets that need to be stored in configuration registers. In such an example, the updated address comprises the originally calculated address plus the sum of all the selected partial offsets.

In a variation of that shown in figure 5 and described above, instead of calculating an on-chip address (in block 502), this may have been determined earlier (e.g. by the resource scheduler 302) and allocated to the geometry task upon creation (e.g. as part of block 204). In such an example, the step of calculating the on-chip address (block 502 in figure 5) is replaced by a step of looking up an on-chip storage address for the geometry task and then the method proceeds as shown in figure 5 and described above by adding one or more offsets if the geometry data is to be written to off-chip storage.

As described above, the geometry pipeline 306 may read the geometry data directly from wherever it is written to (i.e. from either the vertex buffer 308 or off-chip storage) and data that is written to the off-chip storage is not subsequently copied into the vertex buffer 308 if space becomes available. This means that the geometry pipeline reads need to be directed to where the geometry data for a particular geometry task is stored and there are several different ways in which this could be implemented.

When a geometry task is passed to the geometry pipeline 306 for processing (in an operation which may be referred to as 'kicking the task'), the address of the geometry data is passed to the geometry pipeline 306. The address is determined and stored by the VB resource manager 312 when the on-chip memory is allocated (in block 209) or when it is determined that the write will be directed to the off-chip storage (following a 'Yes' in block 212), as described above. The address is then read back when the task is kicked to the geometry pipeline 306. When directing the write, the VB resource manager 312 inherently knows whether the address is in the vertex buffer 308 or the off-chip storage because it has just determined where the write will be directed; however, this is not the case for the geometry pipeline 306.

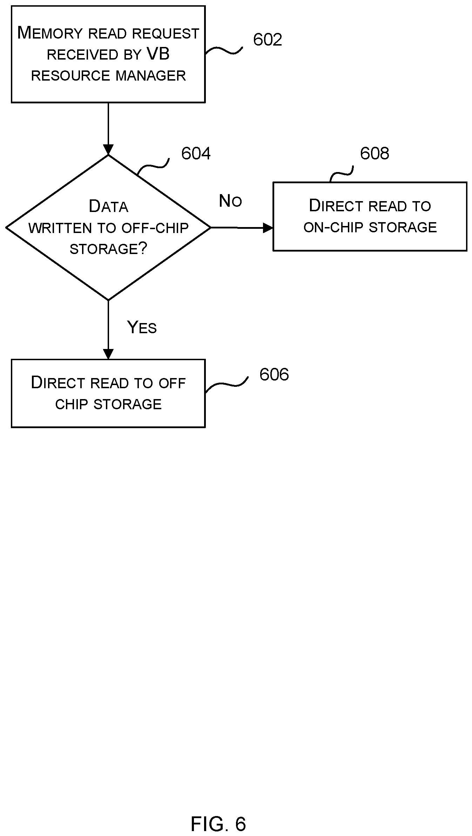

In a first example, shown in figure 6, and in a process which mirrors the writing of the data, the location of the stored geometry data is transparent to the geometry pipeline 306 and instead a look-up is performed by VB resource manager 312 which redirects the reads to the off-chip storage where required. The geometry pipeline 306 sends a read request to the vertex buffer 308 and this is received by the VB resource manager 312 (block 602). The VB resource manager 312 performs a lookup to determine whether the geometry data was previously written to the vertex buffer or to off-chip storage and this requires that this decision data (i.e. the decisions made in the methods of figure 2 or 4) is stored in a data structure. The data structure may, for example, comprise a bit (which may be referred to as a flag or tag) for each task that indicates whether the data was written to off-chip storage. The data structure may be indexed using the GD spill ID or other identifier for the task. If it is determined that the data was written to off-chip storage ('Yes' in block 604), the read is directed to the off-chip storage (block 606) and if it is determined that the data was written to the vertex buffer ('No' in block 604), then the read is directed to the vertex buffer 308 (block 608).

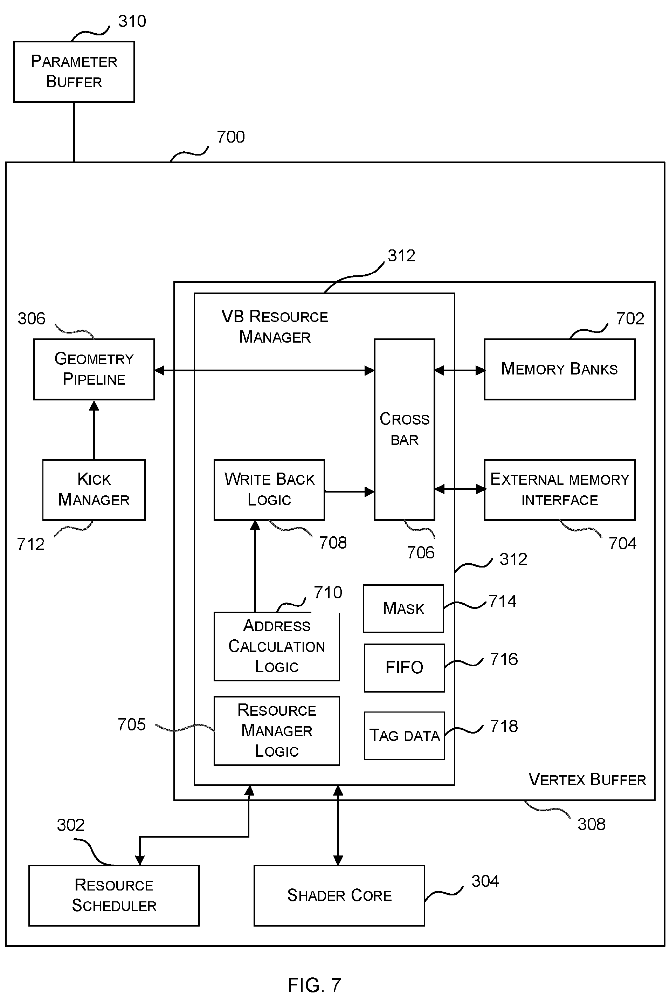

In a second example, the address that is provided to the geometry pipeline 306 for a task is tagged to indicate whether the address relates to either the vertex buffer 308 or to off-chip storage. The geometry pipeline 306 stores and handles this tag and may process it in order to direct the read request appropriately (e.g. such that where the geometry data is written to off-chip storage, the geometry pipeline 306 reads the data from the off-chip storage without communicating with the vertex buffer 308), or alternatively, the geometry pipeline 306 may send the read request, including the tag, to the vertex buffer 308 and a crossbar switch (e.g. with 2 inputs and 2 outputs and configured such that any input can access any output) within the vertex buffer 308 directs the read request either to memory banks within vertex buffer or to the off-chip storage dependent upon the tag. Where such a crossbar is provided, it may also be used to direct the writes, as shown in figure 7 and described below.

Figure 7 shows a second example GPU 700 in which the methods described above may be implemented. Figure 7 shows additional detail compared to the GPU 300 shown in figure 3. In addition to the elements shown in figure 3 and described above, the vertex buffer 308 comprises a plurality of memory banks 702 and an external memory interface 704 which provides the interface to the off-chip storage. The VB resource manager 312 comprises resource manager logic 705 that determines whether a write is to be directed to on-chip or off-chip storage (as described above). The VB resource manager also comprises a crossbar 706 that directs reads and writes to either the memory banks 702 or the external memory interface 704 based on the tag in the request (as described above).

The VB resource manager 312 further comprises the address calculation logic 710 that determines the addresses for the writes and write back logic 708 that directs the writes, along with the corresponding address and tag to the crossbar 706 and also outputs the write addresses and tags to the kick manager 712 that initiates the processing of tasks by the geometry pipeline 306.

The VB resource manager 312 additionally comprises the mask 714 and FIFO 716 described above as well as a tag data store 718 that stores data (e.g. the tags for geometry tasks) that indicates whether the geometry data for a geometry task was written to the vertex buffer memory banks 702 or to the off-chip storage. If the addresses that are output by the write back logic 708 are not tagged (as in one of the implementations described above), then the crossbar 706 may perform a lookup in the tag data 718 in order to determine whether to direct a read or write to the memory banks 702 or to the external memory interface 704.

It will be appreciated that a GPU may comprise additional elements in addition to those shown in figure 7 and/or some of the elements shown in figure 7 may be omitted (e.g. where the addresses are tagged, the tag data store 718 may be omitted).

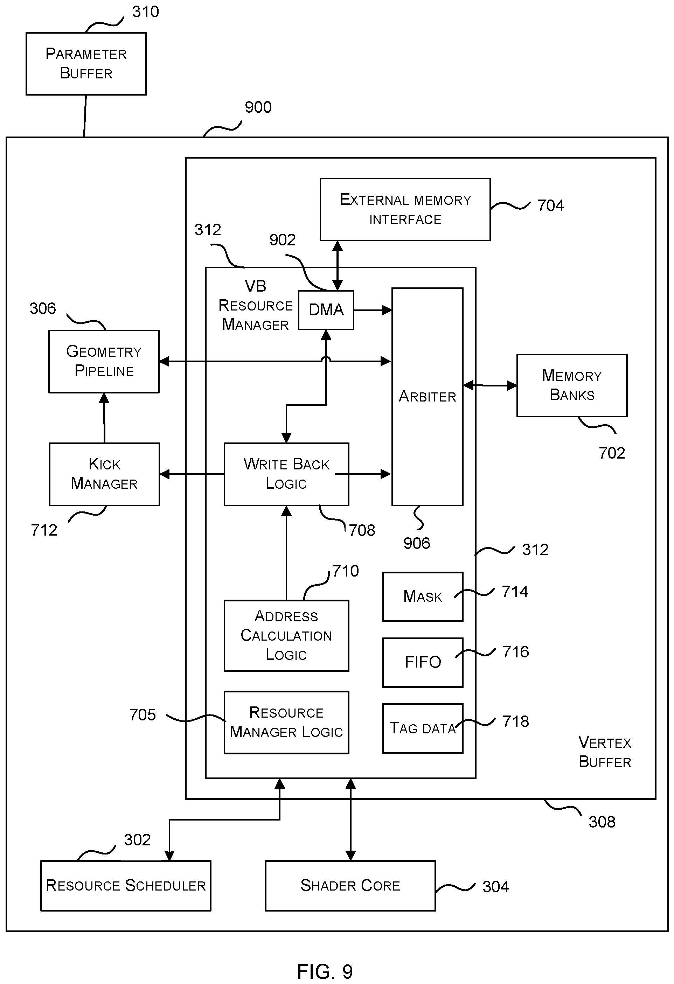

In the GPU 700 shown in figure 7, any writes that are written to off-chip memory are not loaded back into on-chip memory and instead the data is read directly from the off-chip memory. As described above the data may instead be written back to the vertex buffer and read from there, as described below with reference to figure 8, and a further example GPU 900 which operates in this way is shown in figure 9.

Figure 8 shows an example method of writing data back from the off-chip storage into the on-chip storage once the geometry pipeline exits from the OOM state. Having exited the OOM state (block 802), the handling of any new memory allocation requests (e.g. following the receipt of the memory allocation request in block 207 of the method of figure 2 or 4) is paused (block 804). Handling of new memory allocation requests is only resumed once all data has been written back into on-chip storage from off-chip storage, or the geometry pipeline re-enters the OOM state.

Having paused the handling of new memory allocation requests (in block 804), a previously received memory allocation request where the writes were directed to off-chip storage is identified (block 806). It is determined whether there is space to load the data written to off-chip storage into on-chip storage (block 808) and if there is space ('Yes' in block 808), the data for the request is loaded into the vertex buffer (block 810). If this was the last outstanding previously received memory allocation request where the writes were directed to off-chip storage ('Yes' in block 812), then handling of new memory allocation requests resumes (block 816), but if not, the method is then repeated by identifying another previously received memory allocation request where the writes were directed to off-chip storage (in block 806). If at any point it is determined that there is not sufficient space to load the data written to off-chip storage for the identified previously received memory allocation request into on-chip storage ('No' in block 808), then this is re-attempted until space is available ('Yes' in block 808) or the geometry pipeline returns to the OOM state ('Yes' in block 814). If there is insufficient space in on-chip storage ('No' in block 808) and the geometry pipeline has re-entered the OOM state ('Yes' in block 814) then handling of new memory allocation requests resumes (block 816).

By using the method of figure 8, all off-chip allocations are processed to load the data back into on-chip memory before servicing any new allocation requests unless the geometry pipeline re-enters the OOM state.

In order to be able to identify the previously received memory allocation requests where writes were directed to off-chip storage (in block 806), a record is made at the time memory allocation requests are processed (e.g. in the methods of figures 2 and 4) and there are a number of different ways that this may be recorded.

In a first example, two queues are used. The first queue contains new memory allocation requests (e.g. as received in block 207) or identifiers for those requests, where it is yet to be determined whether there is sufficient available on-chip storage (in block 208). The second queue contains identifiers for each allocation request where writes were directed to off-chip storage (e.g. such that the identifier is added to the queue in response to 'Yes' in block 212). After exiting the OOM state (in block 802), requests in the second queue are processed in order to load the writes into the on-chip storage (in block 810) and whilst these requests are processed, new memory requests are held in the first queue and are processed once normal handling resumes (in block 816).

In a second example there is only a single queue of memory allocation requests and when a task is not allocated on-chip storage but instead writes are written to off-chip storage (e.g. following 'Yes' in block 212), the memory request is resubmitted to the back of the queue with a flag to indicate that the memory request needs to be written back from the off-chip storage to on-chip storage. When the OOM state is exited (in block 802), the queue will only comprise flagged memory requests and newly received requests are added to the end of the queue. These will then be processed in order until all the data has been written back to memory (in which case the queue will only comprise newly received requests and handling of these will resume in block 816). A single queue requires less area of memory than using two queues; however, use of a single queue requires additional mechanisms for reordering queue entries if the geometry pipeline re-enters the OOM stage ('Yes' in block 814).

Figure 9 shows a third example GPU 900 in which the methods described above may be implemented. The GPU 900 is a variation of that shown in figure 7, and described above, in which the data is written back to the on-chip storage and read from the on-chip storage by the geometry pipeline 306. The GPU 900 additionally comprises a direct memory access (DMA) module 902 and there is an arbiter 906 instead of the crossbar 706. The DMA 902 connects to the external memory interface 704 and the arbiter 906 and loads the off-chip region of data into the on-chip region (in block 810).

The number of GD spill IDs in the finite set will provide an upper limit on the amount of geometry data that is written to the off-chip storage in the event of OOM; however, in some implementations, there may be a further optimization that prevents more geometry tasks from being created by the resource scheduler 302 in event of the geometry pipeline 306 entering the OOM state. This enables all the geometry tasks from the shader core 306 to be more quickly drained once an OOM state occurs and leaves the resources of the shader core 306 available to process other tasks that might assist in clearing the OOM state (e.g. running fragment shaders on the shader core where a partial rendering of the scene is performed in order to actively reclaim memory that has already been allocated to the parameter buffer 310). There are many different ways in which the resource scheduler 302 can be stopped from creating more geometry tasks and in an example a parameter that defines the maximum number of pending geometry tasks in the shader core (MAX_TASKS) is temporarily set to zero. Where the number of pending geometry tasks in the shader core (NUM_TASKS) is equal to or exceeds the maximum number (i.e. NUM_TASKS≥MAX_TASKS), the resource scheduler 302 is prevented from creating new geometry tasks. When the geometry pipeline resumes (and hence the OOM state is exited), then the maximum number (MAX_TASKS) is reset and the resource scheduler 302 can create new geometry tasks assuming that there are available GD spill IDs. If there are no available GD spill IDs, the resource scheduler 302 cannot create a new geometry task until a GD spill ID has been freed (in block 220).

In a further optimization, once an OOM state occurs ('Yes' in block 212), a parameter (ALLOC_DENY) may be set in the VB resource manager 312 which effectively shortcuts the determination operations in relation to where to direct writes (e.g. which causes blocks 208 and 212 to be omitted) and instead causes the VB resource manager 312 to direct the writes for tasks corresponding to all subsequently received memory allocation requests to off-chip storage (e.g. by going from block 207 straight to block 216 in figure 2 and from block 412 straight to bock 216 in figure 4). When this parameter is set, all tasks in the FIFO are popped from the FIFO without checking for space for a vertex buffer allocation and writes are directed to the off-chip storage. This parameter may be reset when the geometry pipeline resumes (and hence the OOM state is exited).

In the example GPUs 300, 700, 900 shown in figures 3, 7 and 9 (and described above), there is a single shader core 304. In other examples there may be more than one shader core and in such examples, the VB resource manager 312 manages the requests from all the shader cores. Similarly there may be more than one geometry pipeline 306.

Using the methods described herein, the ultimate location of the geometry data is not visible to the shader core 308. Depending upon the implementation, the location may be visible to the geometry pipeline 306 or it may also be invisible to the geometry pipeline 306.

In the above examples, the method is implemented in hardware and the shader program does not require any changes and does not know where the geometry data is ultimately written to. As described above, the vertex buffer 308 makes the determination and directs the writes accordingly. It may also direct the corresponding reads or this may be handled in another manner (as described above). Alternatively, the method could be implemented at least partially in software as described below.

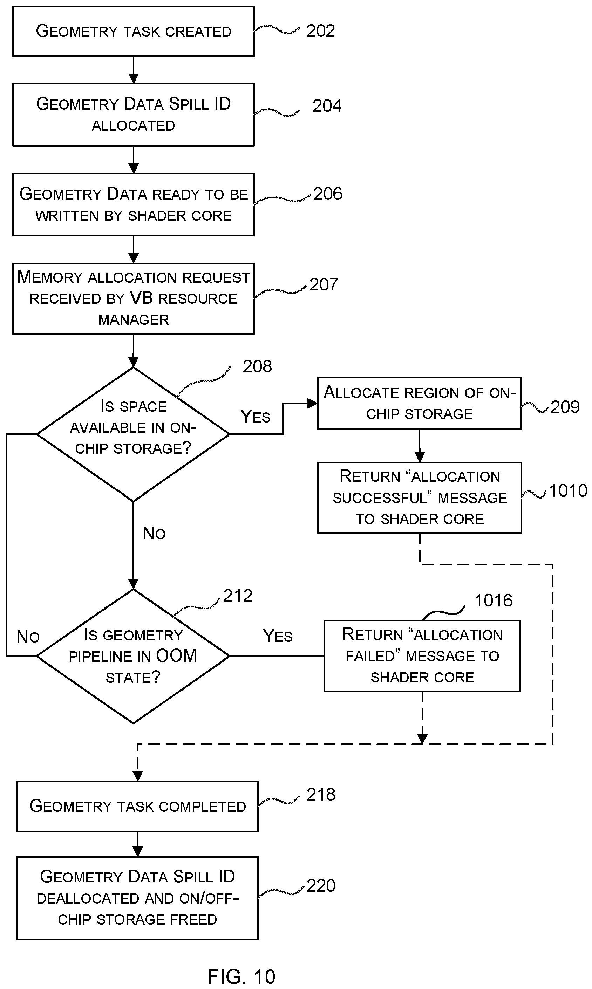

In a partial software implementation, each shader program corresponding to a geometry task (e.g. e.g. vertex shaders, hull shaders, domain shaders, geometry shaders, amplification shaders and mesh shaders) is compiled with two possible paths - one which results in writing the geometry data to the on-chip storage and the other which results in writing the geometry data to the off-chip storage. In such an implementation, the method of figure 2 is modified as shown in figure 10 and the method of figure 7 may be modified similarly.

As shown in figure 10, instead of the VB resource manager 312 directing writes to either the on-chip storage (in block 210) or the off-chip storage (in block 216), the VB resource manager 312 returns an "allocation passed" message (block 1010) following allocation of a region of vertex buffer 308 to the geometry task (in block 209) or returns an "allocation failed" message (block 1016) in the event that there was insufficient space in the vertex buffer ('No' in block 208) and the geometry pipeline is in an OOM state ('Yes' in block 212). In response to receiving the "allocation passed" message, the shader utilises the path that results in the geometry data being written to the on-chip storage and in response to receiving the "allocation failed" message, the shader utilises the path that results in the geometry data being written to the off-chip storage. The addresses used for the writes may be calculated by the shader (e.g. using a base address provided by the resource scheduler 302 on creation of the task with the addition of an offset in the event of an "allocation failed" message) or may be passed to the shader from the VB resource manager 312 as part of the allocation passed / failed message (e.g. as calculated using one of the methods described above).

By using a partial software implementation, the vertex buffer implementation is less complex and a potential bottleneck caused by all writes going through the VB resource manager 312 is avoided; however, the shader code is larger because of the requirement for the two paths (e.g. even though the off-chip storage path may only be used infrequently). Consequently, there may be some implementations where a partial software implementation is preferable and other implementations where the hardware implementation is preferable.

By using the methods described above, it is possible to submit more tasks to the shader core than there is capacity to store the corresponding geometry data in the vertex buffer. This improves the efficiency of the GPU, particularly where there are geometry tasks which include high latency operations, since there are more executing GPU tasks that hide the latency. This can be achieved without requiring an increase in the size of the vertex buffer.

As described above, the allocation of a GD spill ID to a geometry task upon creation does not mean that the geometry data is always written to off-chip storage. Instead, the determination of where to write the geometry data is deferred until the point that the data is ready to be written. This provides a more flexible system that can respond to changes in GPU conditions and reduces the lifetime of registers that are written in the on-chip storage.

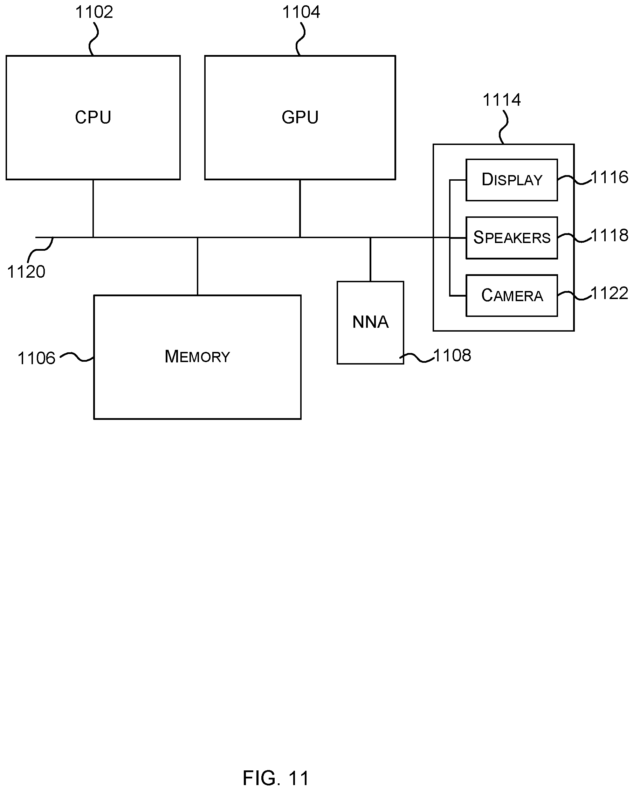

Figure 11 shows a computer system in which the graphics processing systems described herein may be implemented. The computer system comprises a CPU 1102, a GPU 1104, a memory 1106, a neural network accelerator (NNA) 1108 and other devices 1114, such as a display 1116, speakers 1118 and a camera 1122. The GPU 1104 may correspond to the GPU 300, 700, 900 shown in figures 3, 7 or 9. In other examples, one or more of the depicted components may be omitted from the system. The components of the computer system can communicate with each other via a communications bus 1120.

The GPUs of figures 3, 7 and 9 are shown as comprising a number of functional blocks. This is schematic only and is not intended to define a strict division between different logic elements of such entities. Each functional block may be provided in any suitable manner. It is to be understood that intermediate values described herein as being formed by a particular block need not be physically generated by the block at any point and may merely represent logical values which conveniently describe the processing performed by the GPU between its input and output.

The GPUs described herein may be embodied in hardware on an integrated circuit. The GPUs described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a GPU configured to perform any of the methods described herein, or to manufacture a GPU comprising any apparatus described herein. An integrated circuit definition dataset may be, for example, an integrated circuit description.

Therefore, there may be provided a method of manufacturing, at an integrated circuit manufacturing system, a GPU as described herein. Furthermore, there may be provided an integrated circuit definition dataset that, when processed in an integrated circuit manufacturing system, causes the method of manufacturing a GPU to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

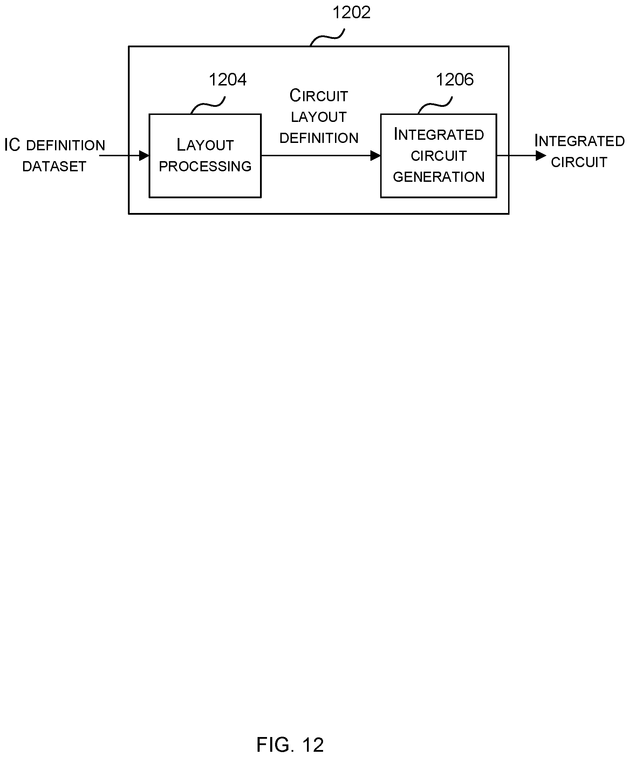

An example of processing an integrated circuit definition dataset at an integrated circuit manufacturing system so as to configure the system to manufacture a GPU will now be described with respect to figure 12.

Figure 12 shows an example of an integrated circuit (IC) manufacturing system 1202 which is configured to manufacture a GPU as described in any of the examples herein. In particular, the IC manufacturing system 1202 comprises a layout processing system 1204 and an integrated circuit generation system 1206. The IC manufacturing system 1202 is configured to receive an IC definition dataset (e.g. defining a GPU as described in any of the examples herein), process the IC definition dataset, and generate an IC according to the IC definition dataset (e.g. which embodies a GPU as described in any of the examples herein). The processing of the IC definition dataset configures the IC manufacturing system 1202 to manufacture an integrated circuit embodying a GPU as described in any of the examples herein.

The layout processing system 1204 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1204 has determined the circuit layout it may output a circuit layout definition to the IC generation system 1206. A circuit layout definition may be, for example, a circuit layout description.

The IC generation system 1206 generates an IC according to the circuit layout definition, as is known in the art. For example, the IC generation system 1206 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1206 may be in the form of computer-readable code which the IC generation system 1206 can use to form a suitable mask for use in generating an IC.

The different processes performed by the IC manufacturing system 1202 may be implemented all in one location, e.g. by one party. Alternatively, the IC manufacturing system 1202 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a GPU without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to figure 12 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in figure 12, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of managing resources in a GPU, the method comprising:
allocating a region of off-chip storage to a geometry task on creation of the geometry task (204);
receiving, at an on-chip store in the GPU, a memory allocation request for the geometry task from a shader core in the GPU (207), wherein the memory allocation request is received after generation of geometry data for the geometry task;
in response to receiving the memory allocation request, determining, by the on-chip store, whether to allocate a region of the on-chip store to the geometry task (208, 212); and
in response to determining to allocate the region of the on-chip store to the geometry task, allocating the region (209), wherein in response to allocating the region of the on-chip store, geometry data for the geometry task is written to the on-chip store and in response to determining not to allocate the region of the on-chip store, the geometry data is written to the allocated region of off-chip storage.

2. The method according to claim 1, further comprising:
in response to allocating the region of the on-chip store, directing a subsequent write instruction for the geometry task received at the on-chip store to the allocated region (210); and
in response to determining not to allocate the region of the on-chip store, directing a subsequent write instruction for the geometry task received at the on-chip store to the allocated region of the off-chip storage (216).

3. The method according to claim 3, further comprising:
calculating an on-chip storage address for the geometry task (502); and
in response to determining not to allocate the region of the on-chip store (504), calculating an updated storage address by adding an offset to the calculated address (508),
wherein the on-chip storage address is used when directing a subsequent write to the on-chip store and the updated storage address is used when directing a subsequent write to the off-chip storage.

4. The method according to claim 3, further comprising:
calculating an on-chip storage address for the geometry task (502); and
in response to determining not to allocate the region of the on-chip store, tagging the address with a first value; and
in response to determining to allocate the region of the on-chip store, tagging the address with a second value;
wherein the value of the tag is used to determine whether to direct a subsequent write to the on-chip store or to the off-chip storage.

5. The method according to any of the preceding claims, wherein determining, by the on-chip store, whether to allocate a region of the on-chip store to the geometry task comprises:
in response to determining that space is available in the on-chip store, allocating the region of the on-chip store to the geometry task (209).

6. The method according to claim 5, wherein determining, by the on-chip store, whether to allocate a region of the on-chip store to the geometry task further comprises:
in response to determining that space is not available in the on-chip store, determining whether a geometry pipeline in the GPU is in an out-of-memory state (212)
in response to determining that the geometry pipeline is in an out-of-memory state, determining not to allocate the region of the on-chip store.

7. The method according to any of the preceding claims, the method further comprising:
on creation of the geometry task, sending an identifier for the geometry task to the on-chip store (404) and adding the identifier to a FIFO in the on-chip store (406); and
in response to receiving the memory allocation request at the on-chip store and prior to determining, by the on-chip store, whether to allocate a region of the on-chip store to the geometry task:
setting a bit in a mask corresponding to the identifier for the geometry task (408), wherein the memory allocation request comprises the identifier for the geometry task;
determining whether the identifier for the geometry task is in a first position in the FIFO (410); and
in response to determining that the identifier for the geometry task is in a first position in the FIFO, popping the task from the FIFO (412) and proceeding to determine whether to allocate a region of the on-chip store to the geometry task.

8. The method according to any of the preceding claims, further comprising:
in response to receiving, at the on-chip store, a memory read request for the geometry data for the geometry task from a geometry pipeline in the GPU (602), determining, by the on-chip store, whether a region of the on-chip store was allocated to the geometry task (604);
in response to determining that a region of the on-chip store was allocated, directing the read request to the on-chip store (608); and
in response to determining that a region of the on-chip store was not allocated, directing the read request to the off-chip storage (606).

9. The method according to any of claim 1-8, further comprising, in response to the GPU exiting an out-of-memory state (802):
identifying a previously received memory allocation request for a geometry task where the geometry data for the geometry task was previously written to the off-chip storage (806);
determining whether space for the previously written geometry data is available in the on-chip store (808); and
in response to determining that space is available, loading the geometry data from the off-chip store into the on-chip store (810).

10. The method according to claim 1, further comprising:
in response to allocating the region of the on-chip store, sending a message to the shader core to indicate a successful allocation (810); and
in response to determining not to allocate the region of the on-chip store, sending a message to the shader core to indicate allocation failure (816),
wherein the message indicating a successful allocation causes the shader core to write the geometry data for the geometry task to the on-chip store and the message indicating allocation failure causes the shader core to write the geometry data to the allocated region of off-chip storage.

11. The method according to any of the preceding claims, further comprising:
in response to completion of the geometry task (218), freeing the allocated region of off-chip storage and any allocated region of the on-chip store (220).

12. The method according to claim 11, wherein the allocated region of off-chip storage is identified by a geometry data spill identifier allocated to the task and wherein the method further comprises:
in response to completion of the geometry task (218), freeing the geometry data spill identifier (220).

13. The method according to claim 12, wherein the geometry data spill identifier is allocated to the task on creation of the geometry task from a finite pool of geometry data spill identifiers.

14. A graphics processing unit, GPU, (300, 700, 900, 1104) comprising:
a resource scheduler (302);
a shader core (304);
a geometry pipeline (306); and
an on-chip store (308),
wherein the resource scheduler (302) is arranged to allocate a region of off-chip storage to a geometry task on creation of the geometry task (204), and
wherein the on-chip store (308) is arranged, in response to receiving a memory allocation request for the geometry task from the shader core in the GPU (207), to determine whether to allocate a region of the on-chip store to the geometry task and in response to determining to allocate the region of the on-chip store to the geometry task, to allocate the region, wherein in response to allocating the region of the on-chip store, geometry data for the geometry task is written to the on-chip store and in response to determining not to allocate the region of the on-chip store, the geometry data is written to the allocated region of off-chip storage, wherein the memory allocation request is received after generation of geometry data for the geometry task.

15. Computer readable code configured to cause the method of claim 10, or any of claims 11-12 when dependent upon claim 10, to be performed when the code is run.
